# EUROPEAN PATENT SPECIFICATION

(11) **EP 0 440 205 B1**
(45) Date of publication and mention of the grant of the patent: **19.07.1995**
(21) Application number: 91101222.7
(22) Date of filing: 30.01.1991
(51) Int. Cl.: B01D 25/133

(54) **Pressing diaphragm and pressing filter plate for a compression type filter press**
Pressmembran und Filterplatte für eine Kompressionsfilterpresse
Membrane à pression et plaque de filtre pour une filtre-presse à plaques

(30) Priority: 30.01.1990 JP 21526/90; 06.03.1990 JP 53942/90; 08.03.1990 JP 57478/90
(43) Date of publication of application: 07.08.1991
(73) Proprietor: KURITA MACHINERY MANUFACTURING COMPANY LIMITED, Osaka-shi Osaka-fu (JP)
(72) Inventor: Kataoka, Atsushi, Suita-shi, Osaka (JP)
(74) Representative: Glawe, Delfs, Moll & Partner

(56) References cited:
- GB-A- 1 583 198
- GB-A- 2 069 358
- GB-A- 2 110 104
- US-A- 4 237 009

## Description

### BACKGROUND OF THE INVENTION

The present invention relates to a pressing diaphragm and a pressing filter plate for use in a compression type filter press. The invention provides a projection member which holds a predetermined gap between adjacent pressing filter plates and supports the filtering face of a pressing filter plate.

Various conventional compression type filter press are known in which in carrying out a filtration, a cake held between a pair of filter cloths provided between a normal filter plate and a pressing filtering plate is compressively filtered by expanding the pressing diaphragm of the pressing filter plate. According to a compression type filter press (Japanese Utility Model Publication No. 56-11928), in mounting the pressing diaphragm on the pressing filter plate, a circular sandwiching metallic material is provided in the center of the pressing diaphragm and the metallic plate is fixed to the main body of the pressing filter plate with bolts.

In this pior art construction, since the pressing diaphragm is fixed to a core plate with the above circular sandwiching metallic plate, the load concentrates on the pressing diaphragm in the periphery of the circular sandwiching metallic plate with the expansion of the pressing diaphragm. Since the pressing diaphragm is fixed to the core plate only by the above circular sandwiching metallic plate, this condition can be compared to a large rubber film fixed by a small pin. When the rubber film expands in this condition, the load concentrates on the pressing diaphragm at the periphery of the pin. That is, with the expansion of the rubber film, the pressing diaphragm at the entire periphery of the circular metallic plate expands in various directions at almost the same time, so that the load concentrates on the pressing diaphragm at the periphery of the circular metallic plate, and as a result, the pressing diaphragm at the periphery of the metallic plate is likely to be damaged, thus resulting in the occurrence of a crack.

In a compression type filter press adjacent filter plates contact each other not only at the periphery, but have one or more projections on their main surface, often called stay-bosses, for contacting each other and preventing bending of the filter plates. The portions of a pressing diaphragm covering these projections are subject to very high load and can be easily damaged. In order to remedy this problem, GB-A-2 110 104 discloses a pressing diaphragm having a hole through which the stay-boss of the filter plate can project to directly contact the adjacent filter plate without the diaphragm being sandwiched there between. This solution, however, presents a problem in securing a proper sealing of the diaphragm around the stay-boss. GB-A 2 069 358 discloses a filter press plate covered by a membrane where the portions of the membrane covering the stay-bosses of the filter plate are reinforced by embeded reinforcing layers made of woven fabric or perforated steal plate. These portions of the membrane, although reinforced, are still subject to very high pressing loads, and expansion of the membrane may still lead to damage at the portions surrounding the stay-boss.

### SUMMARY OF THE INVENTION

It is therefore an object of the invention to provide a pressing diaphragm and a pressing filter plate provided with such pressing diaphragm, in which the diaphragm is effectively protected against damages of the diaphragm due to excessive load concentration upon expansion of the diaphragm.

According to a first aspect of the invention this object is achieved by a pressing diaphragm as defined in claim 1. Claims 2 to 6 define further improvements of the pressing diaphragm according to the invention.

According to a second aspect of the invention the object is achieved by a pressing filter plate as defined in claim 8. Further improvements of the pressing filter plate according to the invention are defined in claims 9 and 10.

By the pressing diaphragm according to the present invention, the following advantages can be obtained:

The projection member, which preferably comprises a plurality of pillar portions connected with each other with the long connecting plate portion, is mounted not on the pressing filter plate main body, but on the pressing diaphragm, so that the projection member is capable of freely moving with respect to the pressing filter plate main body with the expansion of the pressing diaphragm without regulating the expansion of the pressing diaphragm. Accordingly, a sudden increase of a load on the pressing diaphragm in the vicinity of the projection member is suppressed when the pressing diaphragm expands, and therefore, a crack of the pressing diaphragm can be effectively prevented. Not providing the gap holding plate on the surface of the pressing diaphragm, the pillar is inserted into the through-hole of the pressing diaphragm, the projection member is mounted on one or a plurality of projection member mounting member with the fixture, and the pressing diaphragm is sandwiched between the projection member and the projection member mounting member. Therefore, in clamping the filter plates, when pressure is applied from an adjacent filter plate to the pressing diaphragm, the pressure is applied to the projection member and the projection member mounting member via the pillar and is not applied to the pressing diaphragm. Accordingly, damage of the pressing diaphragm can be effectively prevented when the filter plate is clamped. In addition, since the pressing filter plate main body is not required to be provided with a mounting hole for mounting the projection member, the main body can be manufactured more easily.

In mounting a plurality of projection members on the pressing diaphragm, each projection member is capable of individually moving with the expansion motion of the pressing diaphragm because adjacent projection members are spaced a certain interval from each other. Therefore, an overload is not applied to the pressing diaphragm. Not providing the gap holding plate on the surface of the pressing diaphragm, the pillar is inserted into the through-hole of the pressing diaphragm, the projection member is mounted on one or a plurality of projection member mounting member with the fixture, and the pressing diaphragm is sandwiched between the projection member and the projection member mounting member. Therefore, in clamping the filter plates, when pressure is applied from an adjacent filter plate to the pressing diaphragm, the pressure is applied to the projection members and the projection member mounting member via the pillar and not applied to the pressing diaphragm.

By the pressing filter plate according to the present invention, the following advantages can be obtained: The projection member comprises a plurality of pillar portions connected with each other with the long connecting plate and the pressing diaphragm is fixed to the pressing filter plate main body with the projection member, so that in each pillar portion, the pressing diaphragm expands not in the entire region thereof, but in a part thereof and the expansion of the remaining pressing diaphragm is restricted by the long connecting plate. Accordingly, when the pressing diaphragm expands, this construction reduces the load on the pressing diaphragm in the vicinity of the projection member, thus effectively preventing the pressing diaphragm from being cracked.

### BRIEF DESCRIPTION OF THE DRAWINGS

These and other objects and features of the present invention will become clear from the following description taken in conjunction with the preferred embodiments thereof with reference to the accompanying drawings, in which:
Figs. 1 and 2 are each a side elevation of a filter press having a pressing filter plate of a compression type filter press according to an embodiment of the present invention, and a sectional view taken along the line II-II of Fig. 1;
Figs. 3, 4, and 5 are each a front view showing principal portions in the condition in which a projection member and a projection member mounting plate are mounted on a filtering film, a side elevation partly in section and a plan view partly in section in which a pressing filter plate and a normal filter plate are clamped with the projection member and the projection member mounting plate mounted thereon;
Fig. 6 is a front view showing a principal portion in the condition in which the projection member and the projection member mounting plate are mounted with a bolt;
Figs. 7 and 8 are a sectional view, respectively taken along the line VII-VII of Fig. 6 and the line VIII-VIII of Fig. 6;
Figs. 9 and 10 are each a rear elevation, showing the projection member, viewed from the line IX-IX of Fig. 8 and a rear elevation, showing the projection member mounting plate, viewed from the line X-X of Fig. 8;
Fig. 11 is a side elevation partly in section showing the principal portion of a filter press in which the filter plates are clamped;
Figs. 12, 13, and 14 are each a front view showing principal portions in the condition, according to another embodiment, in which a projection member and a projection member mounting plate are mounted on a filtering film, a side elevation partly in section and a plan view partly in section in which a pressing filter plate and a normal filter plate are clamped with the projection member and the projection member mounting plate mounted thereon;
Fig. 15 is a front view showing a principal portion in the condition in which the projection member and the projection member mounting plate are mounted with a bolt;
Figs. 16 and 17 are a sectional view, respectively taken along the line XVI-XVI of Fig. 15 and the line XVII-XVII of Fig. 15;
Fig. 18 is a rear elevation, showing the projection member, viewed from the line XVII-XVII of Fig. 17;
Figs. 19, 20, and 21 are each a front view showing principal portions, according to still another embodiment, in which a projection member and a projection member mounting plate are mounted on a filtering film, a side elevation partly in section and a plan view partly in section in which a pressing filter plate and a normal filter plate are clamped with the projection member and the projection member mounting plate mounted thereon;
Fig. 22 is a front view of a principal portion showing the condition in which the projection member and the projection member mounting plate are mounted with bolts;
Figs. 23 and 24 are each a plan view partly in section and a side elevation partly in section showing the principal portion of the projection member and the projection member mounting plate shown in Fig. 22;
Fig. 25 is a rear elevation showing the principal portion of the projection member shown in Fig. 22;
Fig. 26 is a front view showing a pressing filter plate according to a further embodiment;
Fig. 27 is a front view, of a pressing diaphragm according to a further embodiment, showing the relationship between the pressing diaphragm and a pressing filter plate by dotted lines;
Fig. 28 is a sectional view showing a filter press having a pressing filter plate of a compression type filter press according to an embodiment of the present invention;
Figs. 29, 30, and 31 are respectively a front view of a part of another embodiment in the condition in which a projection member and a projection member mounting plate are mounted on a filtering film, a side elevation partly in section and a plan view partly in section in which the pressing filter plate and the normal filter plate are clamped with the projection member and the projection member mounting plate mounted thereon;
Fig. 32 is a front view showing the condition in which a projection member and a projection member mounting plate are mounted with a bolt;
Fig. 33 is a sectional view taken along the line VII-VII shown in Fig. 32;
Figs. 34 and 35 are each a rear elevation, showing the projection member, viewed from the line VIII-VIII of Fig. 33 and a rear elevation, showing the projection member mounting plate, viewed from the line IX-IX of Fig. 33;
Fig. 36 is a side elevation partly in section showing a part of a filter press in which the filter plates are clamped;
Fig. 37 is a front view showing the condition in which a projection member and a projection member mounting plate according to another embodiment are mounted with bolts;
Figs. 38 and 39 are each a bottom view showing the projection member and the projection member mounting plate shown in Fig. 37 and a sectional view taken along the line XII-XII shown in Fig. 37;
Fig. 40 is a rear elevation showing the projection member viewed from the line XIV-XIV shown in Fig. 39;
Figs. 41, 42, and 43 are each a front view showing the condition, according to another embodiment, in which a projection member and a projection member mounting plate are mounted on a pressing diaphragm, an enlarged front view showing a part of Fig. 41, and a side elevation partly in section in which the pressing filter plate and the normal filter plate are clamped with the projection member and the projection member mounting plate mounted thereon;
Fig. 44 is a front view showing a pressing filter plate according to a further embodiment;
Fig. 45 is a front view, of a pressing diaphragm according to a still further embodiment, showing the relationship between the pressing diaphragm and a pressing filter plate by dotted lines;
Fig. 46 is a sectional view showing a filter press having a pressing filter plate of a compression type filter press according to an embodiment of the present invention;
Figs. 47, 48, and 49 are each a front view showing a projection member mounted on a pressing diaphragm, a side elevation partly in section and a plan view partly in section showing the condition in which filter plates having the projection member mounted thereon are clamped.
Fig. 50 is a side elevation partly in section showing a part of the filter press in which the filter plates are clamped; and

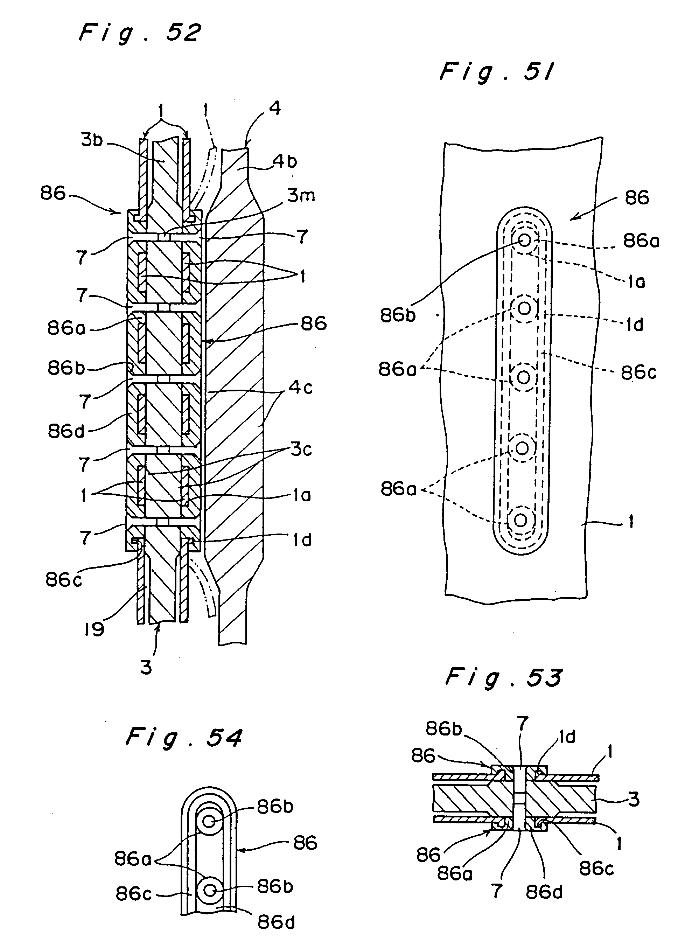

Figs. 51, 52, 53, and 54 each show a modification of a projection member, namely, a front view showing the condition in which the projection member is mounted on a pressing diaphragm, a side elevation partly in section showing the condition in which a filter plate having the projection member mounted thereon, a plan view partly in section showing the part in the condition in which the pressing filter plates having the projection member mounted thereon are clamped, and a rear elevation partly in section of the principal portion of the pressing filter plate having the projection member mounted thereon.

### DETAILED DESCRIPTION OF THE EMBODIMENTS

Before the description of the present invention proceeds, it is to be noted that like parts are designated by like reference numerals throughout the accompanying drawings.

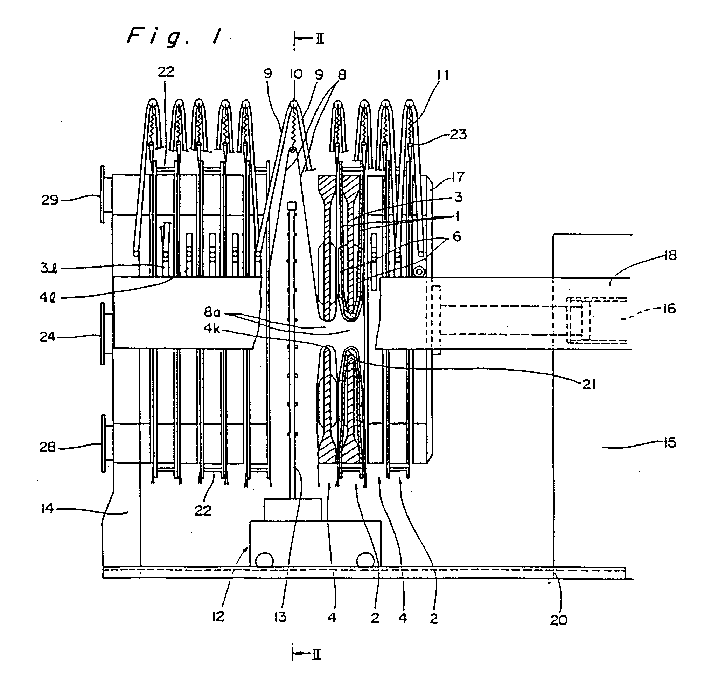

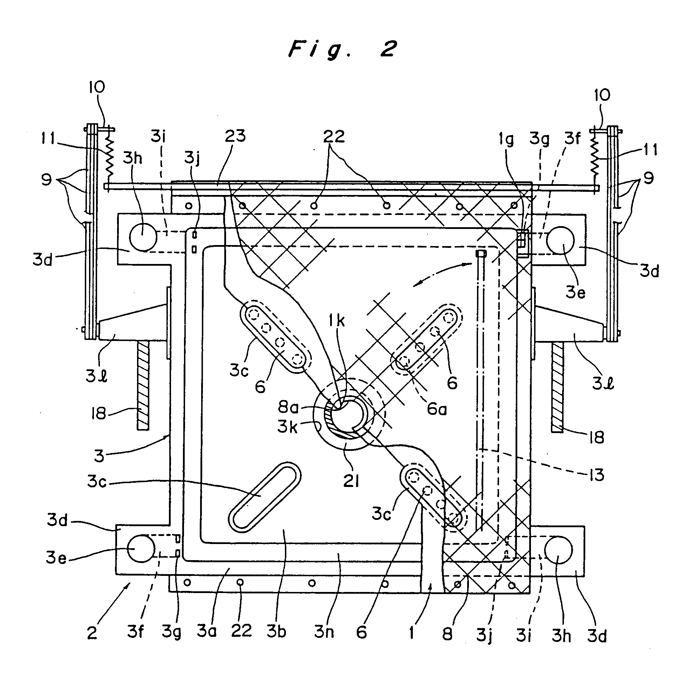

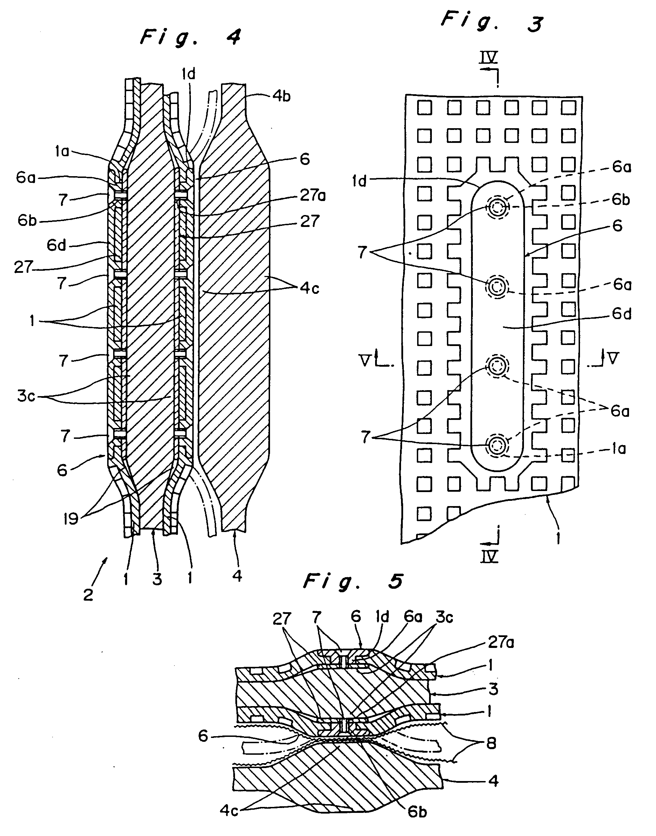

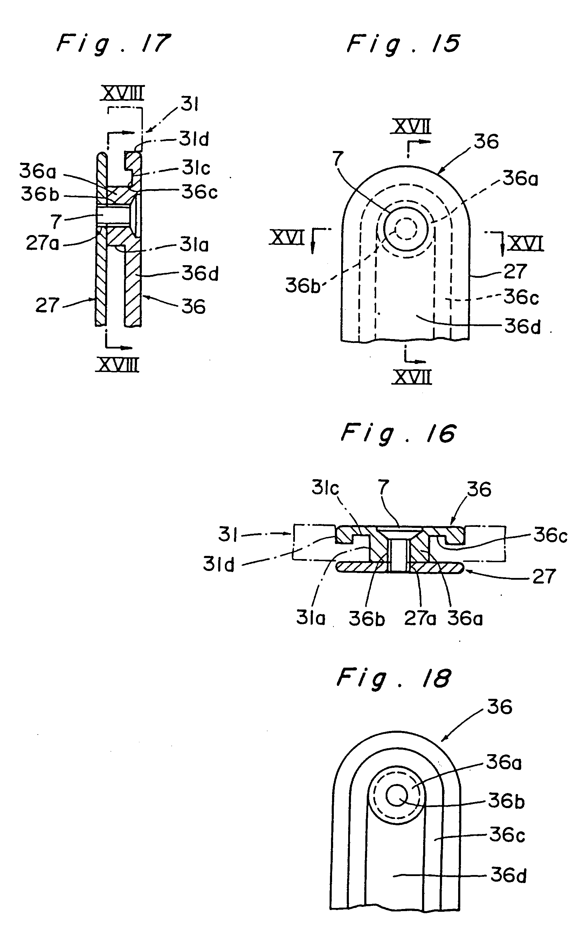

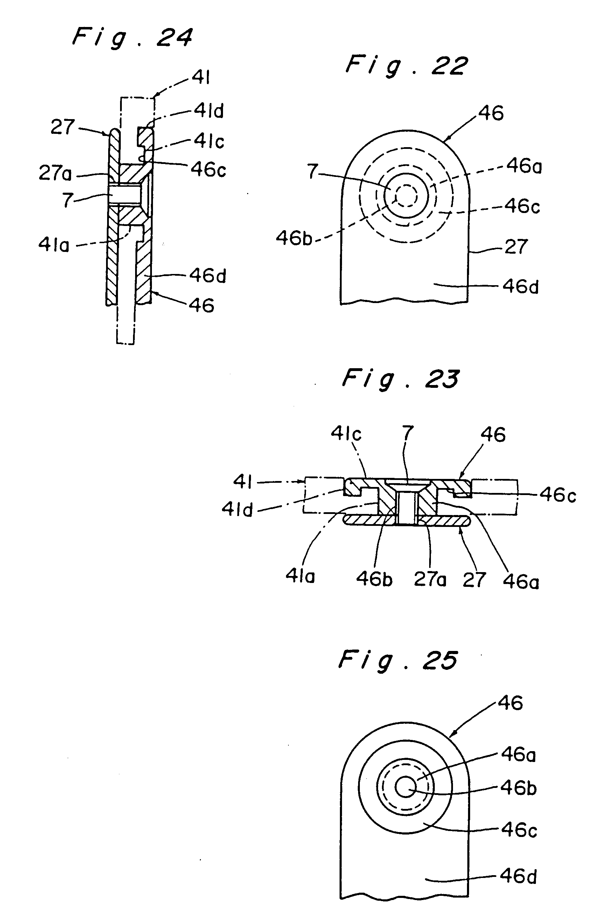

Embodiments according to the present invention are described in detail based on Figs. 1 through 27.

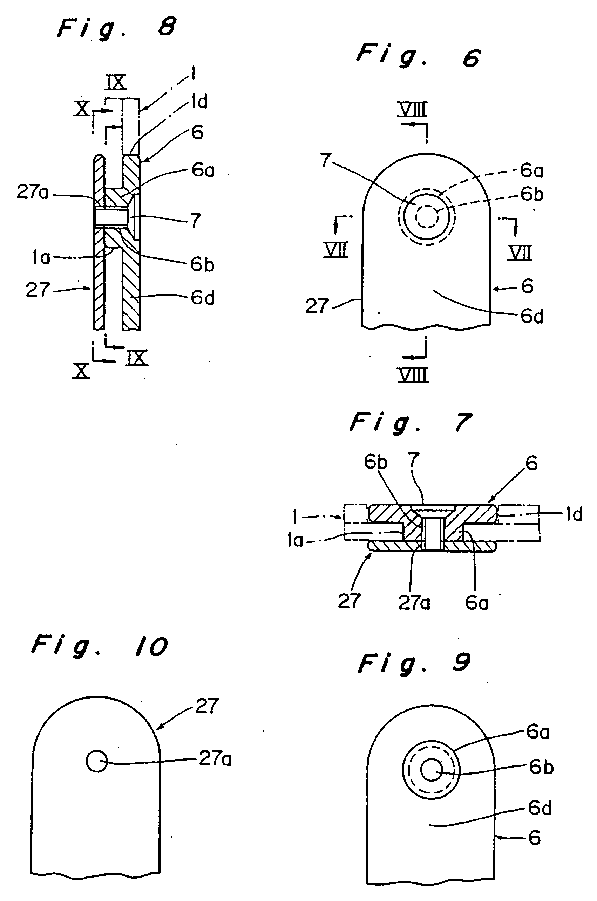

As shown in Figs. 1 and 2, in a filter press having a pressing filter plate 2 of a pressing type filter press according to the embodiment, the pressing filter plate 2 and a normal filter plate 4 are alternately arranged longitudinally between front and back stands 14 and 15 so that the pressing filter plate 2 and the filtering plate 4 are slidable with respect to a pair of guide rails 18 and 18, a movable plate 17 is clamped to the front stand side by a driving device 16 provided in the rear stand 15, then, a slurry is supplied to a pair of filter cloths 8 and 8 arranged between the filter plates 2 and 4 so as to carry out a filtration, and at the same time or thereafter, a pressing diaphragm 1 is expanded by supplying compressed fluid to the pressing filter plate 2 so as to effect a compressive filtration.

In the pressing filter plate 2, the surface of the front and rear sides of a square filter plate main body 3 is covered with a pair of the pressing diaphragms 1 and 1, projection members 6 are provided on the surface of each pressing diaphragm 1, projection member mounting plates 27 serving as projection member mounting members are provided on the rear surface of each pressing diaphragm 1, and each projection member 6 is mounted on the projection member mounting plate 27 so that the projection members 6 sandwich the pressing diaphragm 1 therebetween.

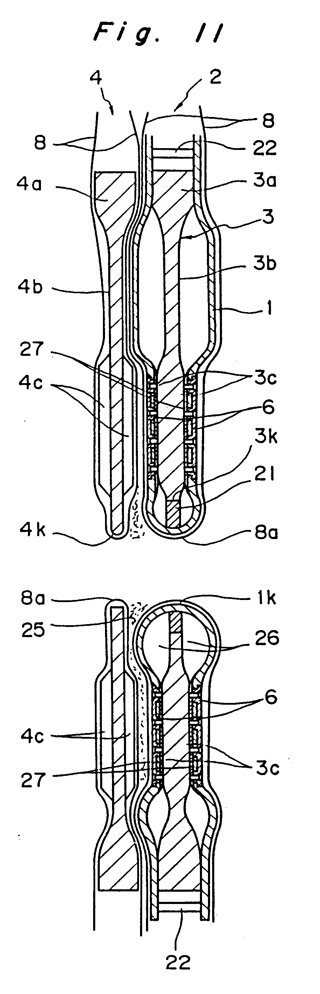

In the main body 3, an inclined face 3n is formed on the inner side of a square outer frame 3a and a squarely concave filtering face 3b is formed inside the inclined face 3n. A laterally projecting ear 3d is formed integrally with each corner of the main body 3 and a through-hole 3e or 3h is formed in each ear 3d. In Fig. 2, the through-hole 3h of each ear 3d positioned on the upper left and lower right of the main body 3 communicates with each opening 3j of the inclined face 3n of the main body 3 via a communicating passage 3i so as to constitute a supply passage of compressed fluid communicating with a compressed fluid supply chamber 26 which will be described later. The through-hole 3e of each ear 3d positioned on the lower left and upper right of the main body 3 communicates with each opening 3g of the outer frame 3a of the main body 3 via a communicating passage 3f so as to constitute a filtrate collecting passage. A laterally projecting grip 3ℓ, 4ℓ is formed on each side of the main body 3 and each grip 3ℓ, 4ℓ is slidably mounted on each guide rail 18 provided in the longitudinal direction of the filter press so as to hangingly support each pressing filter plate 2 on the pair of the guide rails 18 and 18. A slurry supply opening 3k is formed in the center of the filtering face 3b of the main body 3, and a pair of projecting portions 3c and 3c are formed on the filtering face 3b such that they are spaced a predetermined distance from the slurry supply opening 3k and positioned on each diagonal line of the filtering face 3b. Each projecting portion 3c is in the configuration of an approximately rectangular plate and both ends thereof are curved. The projecting portion 3c allows the formation of a gap 19, between the rear surface of the pressing diaphragm 1 and the surface of the filtering face 3b except the portion on which the projecting portion 3c is formed, which communicates with the compressed fluid supply chamber 26 (refer to Fig. 11) so as to facilitate the supply of compressed fluid between the pressing diaphragm 1 and the main body 3. In clamping the filter plates, the projecting portion 3c supports both filtering faces 3b and 4b in cooperation with the projection member 6, the projection member mounting plate 27, and the projecting portion 4c of the filter plate 4 which will be described later, thus preventing the breakage of the filtering faces 3b and 4b.

The pair of the pressing diaphragms 1 and 1 has irregularities on the surface thereof, is made of an elastic material such as rubber, is provided to cover the filtering faces 3b and 3b positioned in the front and rear sides of the main body 3 as well as the inclined faces 3n and 3n, and is connected with each other at the upper and lower ends thereof by bolts 22. A ring 21 is mounted around the peripheral edge of the slurry supply opening 3k of the main body 3 to form, in the center of the pressing diaphragm 1, a slurry supply opening 1k communicating with the slurry supply opening 3k of the main body 3. The projection members 6 and the projection member mounting plates 27 are provided in the periphery of the slurry supply opening 1k such that the position of the projection members 6 and the projection member mounting plates 27 correspond to each projecting portion 3c and are each spaced a predetermined distance from the slurry supply opening 1k. As shown in Figs. 3 through 5, a projection member fit-in concave portion 1d is formed in the portion in which each projection member 6 is provided. The projection member fit-in concave portion 1d is in a flat configuration approximately similar to that of the projection member 6 and has four small through-holes 1a formed on the bottom surface thereof. A filtrate collecting opening 1g communicating with each opening 3g of the outer frame 3a of the main body 3 is formed on the corner of the pressing diaphragm 1 at the lower left and upper right thereof.

Preferably, each projection member 6 is made of a hard material, such as stainless steel or nylon plywood and approximately rectangular such that both ends thereof are curved as shown in Figs. 3 through 9. Preferably, the thickness of the projection member 6 is so determined that the surface of the projection member 6 almost coincides with that of the outer frame 3a of the main body 3 when the projection member 6 is fitted in the projection member fit-in concave portion 1d formed on the pressing diaphragm 1. Each projection member 6 comprises four circular pillars 6a, a mounting hole 6b penetrating through the center of each pillar 6a, and a long connecting plate 6d which connects the pillars 6a with each other. Each pillar 6a is fitted in each circular through-hole 1a of the pressing diaphragm 1, thus contacting the surface of the projection member mounting plate 27. Since each pillar 6a is fitted in each through-hole 1a of the pressing diaphragm 1, preferably, when the filter plates are clamped, each pressing filter plate 2 is pressed by the adjacent normal filter plate 4, and the peripheral portion of each pillar 6a of the connecting plate 6d is capable of tightly contacting the peripheral surface of each through-hole 1a of the pressing diaphragm 1.

As shown in Figs. 4 through 8 and Fig. 10, the projection member mounting plate 27 is in approximately the same flat configuration as the projection member 6 and approximately rectangular such that both ends thereof are curved. A mounting hole 27a communicable with the mounting hole 6b of each pillar 6a of the projection member 6 is formed to penetrate through the projection member mounting plate 27.

Therefore, the projection member 6 is provided on the surface of each pressing diaphragm 1 by fitting the projection member 6 in the projection member fit-in concave portion 1d formed in the portion corresponding to the projecting portion 3c of the main body 3, the projection member mounting plate 27 is provided on the rear surface of each pressing diaphragm 1 such that the position thereof corresponds to the projecting portion 3c of the main body 3, and a bolt 7 serving as a fixture is inserted into the mounting hole 6b of each pillar 6a of the projection member 6 and screwed into the mounting hole 27a of the projection member mounting plate 27. Thus, the projection member 6 and the projection member mounting plate 27 are mounted on the pressing diaphragm 1 such that the pressing diaphragm 1 is sandwiched between the projection member 6 and the projection member mounting plate 27. At this time, although the pressing diaphragm 1 is sandwiched between the projection member 6 and the projection member mounting plate 27, the pressing diaphragm 1 is not damaged by the bolt 7 because the pressing diaphragm 1 is not provided in a portion sandwiched between the projection member 6 and the projection member mounting plate 27 with the bolt 7, namely, between the pillar 6a and the projection member mounting plate 27. The projection member mounting plate 27 is capable of contacting the projecting portion 3c of the main body 3 opposed thereto, thus contacting the projecting portion 3c when the filter plates are clamped. The projection member mounting plate 27 can be reliably brought in contact with the projecting portion 3c by making the projecting portion 3c a little larger than the projection member mounting plate 27. The projection member 6 and the projection member mounting plate 27 are mounted on the pressing diaphragm 1 with four bolts 7 in this embodiment, however, they can be mounted thereon with only the upper and lower bolts 7 and 7. Preferably, the projection members 6 and the projection member mounting plates 27 are positioned in the periphery of the slurry supply opening 3k of the filtering face 3b of the main body 3 in a good balance.

In the normal filter plate 4, an inclined face is formed inside a square plate-shaped outer frame 4a and a square concave filtering face 4b is formed inside the outer frame 4a. Similarly to the pressing filter plate main body 3, a laterally projecting ear (not shown) is formed integrally with each corner of the filter plate 4 and a through-hole is formed in each ear. The through-hole of each ear on the lower left and upper right of the filter plate 4 is connected with the opening of the filtering face 4b in the vicinity of the outer frame 4a of the normal filter plate 4 through a connecting passage so as to constitute a filtrate collecting passage communicating with the through-hole of the ear of the normal filter plate 4. A laterally projecting grip 3ℓ, 4ℓ is formed on each side of the normal filter plate 4 and each grip 3ℓ, 4ℓ is slidably mounted on each guide rail 18 provided in the longitudinal direction of the filter press so as to hangingly support each normal filter plate 4 by the pair of the guide rails 18 and 18. A slurry supply opening 4k is formed in the center of the filtering face 4b of the filter plate 4, and a pair of projecting portions 4c and 4c is formed in the periphery of the slurry supply opening 4k such that the pair of the projecting portions 4c and 4c is positioned on each diagonal line of the filtering face 4b and spaced a predetermined distance from the slurry supply opening 4k. Each projecting portion 4c is approximately rectangular in opposition to each projection member 6 and both ends thereof are curved. When the filter plates 2 and 4 are clamped, each projection member 6 mounted on each pressing diaphragm 1 by mounting it on each projection member mounting plate 27 contacts the projecting portion 4c of the normal filter plate 4 via the filter cloths 8 and 8 so as to keep a predetermined space between both filtering faces 2b and 4b of the filter plates 2 and 4 adjacent to each other and support the filtering faces 2b and 4b so that they are not damaged when the filter plates are clamped or compressed fluid is supplied.

According to the above construction, the pressing filter plate 2 and the normal filtering plate 4 are driven by the driving device 16 to perform clamping by moving the movable plate 17 toward the front stand. In this clamped condition, the projection member mounting plate 27 contacts the projecting portion 3c of the main body 3, and the projection member 6 mounted on the pressing diaphragm 1 in opposition to the projection member mounting plate 27 contacts the adjacent projecting portion 4c of the normal filter plate 4 in collision with therewith through the pair of the filter cloths 8 and 8. In Fig. 2, the projection member 6 and the projection member mounting plate 27 are provided on the diagonal line of each filtering face 3b in a good balance and located symmetrically with respect to both sides of the main body 3, so that when the adjacent filter plates 2 and 4 are clamped, an approximately uniform clamping force acts on the filtering faces 3b and 4b. In the above clamped condition, a slurry is supplied, for performing filtering, from a slurry supply pipe 24 of the front stand 14 to the space between the pair of the filter cloths 8 and 8 through the slurry supply openings 3k and 4k of each filter plate 2 and 4. After a slurry supply work is carried out for a predetermined period of time or with the supply of a predetermined amount of slurry, compressed fluid, for example, compressed air is supplied from the supply pipe to the pressing filter plate 2 through the supply passage of the compressed fluid, thus resulting in the expansion of the pressing diaphragm 1. That is, as shown in Fig. 11, compressed fluid is supplied to the compressed fluid supply chamber 26 positioned between the pressing diaphragm 1 and the main body 3, resulting in the expansion of the pressing diaphragm 1. At this time, the projection member 6 and the projection member mounting plate 27 mounted on the pressing diaphragm 1 are capable of moving with respect to the main body 3 with the expansion of the pressing diaphragm 1. Due to the expansion of the pressing diaphragm 1, a cake held between both filter cloths 8 and 8 is compressively filtered. The filtrate discharged during the above filtration and the compressive filtration is collected by the filtrate collecting passage and then, discharged from a filtrate collecting pipe 28. When a predetermined filtering work terminates, the movable plate 17 is moved to the rear stand by the driving device 16, then, the filter plates 2 and 4 are individually opened to drop the cake held between the filter cloths 8 and 8 for the collection of the cake. As shown in Fig. 1, each filter cloth 8 is supported by a filter cloth hanging bar 23 hung by a spring 11 mounted on a pin 10 which connects the upper end of an arm 9, the lower end of which is pivotally mounted on the grips 3ℓ and 4ℓ of each of the filter plates 2 and 4. Therefore, the filter cloths 8 and 8 are vibrated by the vibration of the filter plates 2 and 4 which occurs when the plates thereof are opened to each other or by a vibration imparting device not shown, and as a result, the cake separates from the filter cloths 8 and 8 and drops therefrom. After the cake is collected, the filter cloths 8 and 8 are washed by rotating the washing tube 13, of a washing device 12 which moves longitudinally along a rail 20, about the lower end thereof to the position shown by one-dot chain line of Fig. 2. When the washing work has terminated, the filter plates 2 and 4 are clamped again for the following filtering work.

According to the above embodiment, the projection member 6 comprises a plurality of the pillars 6a connected with each other by the long connecting plate 6d, and the projection member 6 is mounted on the pressing diaphragm 1 with the projection member mounting plate 27 and the bolts 7 in such a manner that the pressing diaphragm 1 is sandwiched between the projection member 6 and the projecting member mounting plate 27, and the projection member 6 is not fixed to the pressing filter plate main body 3. Consequently, with the expansion of the pressing diaphragm 1, the projection member 6 is capable of freely moving with respect to the pressing filter plate main body 3 without restricting the expansion of the pressing diaphragm 1. Therefore, when the pressing diaphragm 1 expands, the sudden increase of a load on the pressing diaphragm 1 positioned in the vicinity of the projection member is suppressed, so that the crack of the pressing-diaphragm 1 can be effectively prevented. Not mounting the gap holding plate on the surface of the pressing diaphragm 1, each pillar 6a is inserted into each through-hole 1a of the pressing diaphragm 1 and the projection member 6 is mounted on the projection member mounting plate 27 with the bolts 7 so that the pressing diaphragm 1 is sandwiched between the projection member 6 and projection member mounting plate 27, and as a result, in clamping the filter plates, even though pressure is applied from the adjacent filter plate 4 to the pressing diaphragm 1, the pressure acts on the projection member 6 and the projection member mounting plate 27 via the pillars 6a while the pressure hardly acts on the pressing diaphragm 1. Accordingly, in clamping the filter plates, the damage of the pressing diaphragm 1 can be effectively prevented. Since the projecting portions 3c and 4c and the projection member 6 are disposed radially with respect to the slurry supply openings 3k and 4k toward the corners of the filtering faces 3b and 4b, the slurry can be smoothly supplied to the corners of the filtering faces 3b and 4b. Further, since the pressing filter plate main body 3 is not required to be provided with a mounting hole for mounting the projection member 6, the pressing filter plate main body 3 can be manufactured more simply.

The present invention is not limited to the above embodiments, but can be embodied in various modifications.

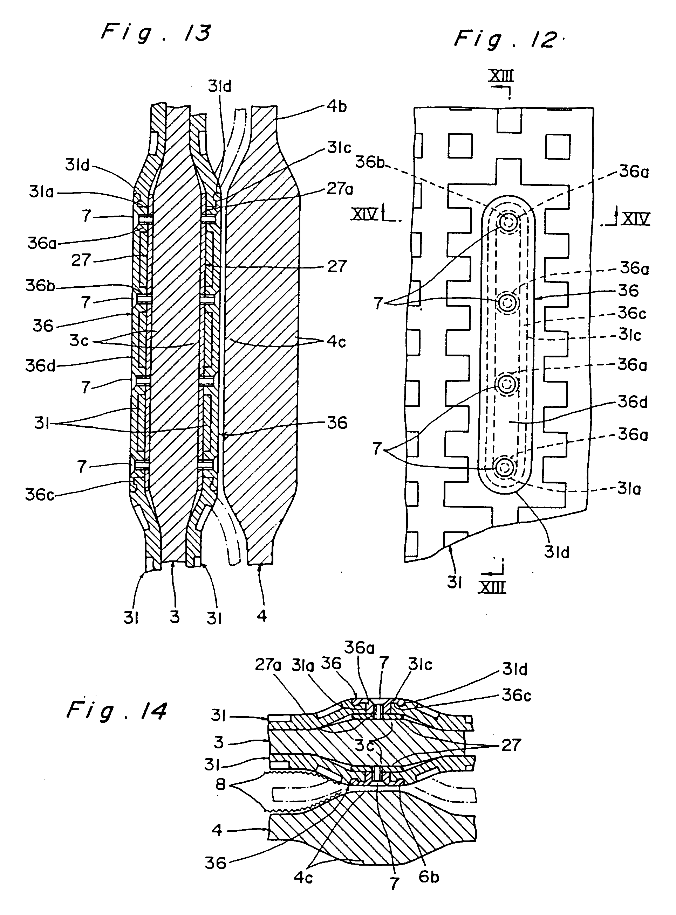

For example, as shown in Figs. 12 through 18, in order to allow each projection member 6 to tightly contact the pressing diaphragm 1, one engaging concave portion 36c can be formed in the periphery of arbitrary number of, for example, four pillars. In this projection member 36, a pillar 36a, a mounting hole 36b, and a connecting plate 36d correspond to the pillar 6a, the mounting hole 6b, and the connecting plate 6d of the projection member 6, respectively. In the pressing diaphragm 31, a through-hole 31a and a projection member fit-in concave portion 31d correspond to the through-hole 1a and the projection member fit-in concave portion 1d of the pressing diaphragm 1, respectively. The engaging concave portion 36c is formed in the periphery of the rear surface of the projection member 36 as an approximately rectangular frame-shaped concave portion having both upper and lower end portions thereof curved as shown in Fig. 12 and positioned such that it surrounds the four pillars 36a of the projection member 36. In correspondence with the engaging concave portion 36c, an engaging projection 31c approximately rectangular and curved in both upper and lower end portions thereof as shown in Fig. 12 is formed in such a manner that it surrounds the four through-holes 31a of the pressing diaphragm 31. The engaging projection 31c formed on the pressing diaphragm 31 is capable of tightly contacting the engaging concave portion 36c of the projection member 36, so that the leakage of the filtrate from the front surface to rear surface of the pressing diaphragm 1 or the leakage of the compressed fluid from the rear surface to front surface thereof can be effectively prevented. Similarly to the projection member 6, the projection member 36 is mounted on the pressing diaphragm 1 by means of the projection member mounting plate 27 and the bolts 7, thus displaying an effect similar to that of the projection member 6.

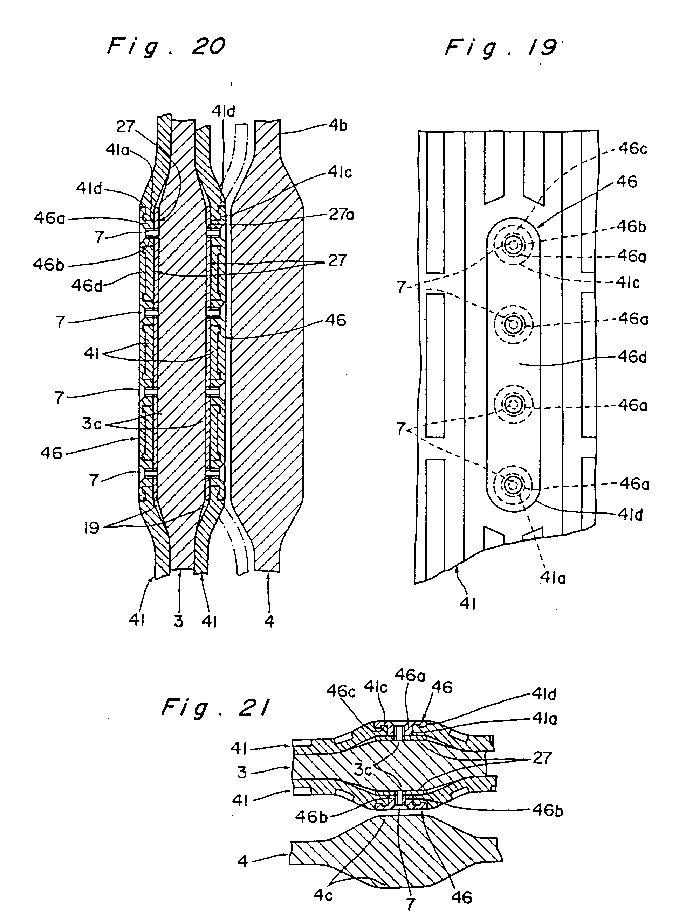

As shown in Figs. 19 through 25, an engaging concave portion 46c can formed in the periphery of each pillar 46a in order to allow each projection member 46 to contact the pressing diaphragm 1 tightly. In this projection member 46, a pillar 46a, a mounting hole 46b, and a connecting plate 46d correspond to the pillar 6a, the mounting hole 6b, and the connecting plate 6d of the projection member 6, respectively. In a pressing diaphragm 41, a through-hole 41a and a projection member fit-in concave portion 41d correspond to the through-hole 1a and the projection member fit-in concave portion 1d of the pressing diaphragm 1, respectively. Each engaging concave portion 46c is circularly formed in the periphery of each pillar 46a such that it surrounds the pillar 46a. In correspondence with the engaging concave portion 46c, a circular engaging projecting portion 41c is formed such that it surrounds the periphery of each through-hole 41a. The engaging projection 41c formed on the pressing diaphragm 41 tightly contacts the engaging concave portion 46c of the projection member 46, so that the leakage of the filtrate from the front surface to the rear surface of the pressing diaphragm 1 or the leakage of the compressed fluid from the rear surface to front surface thereof can be effectively prevented. Similarly to the projection member 6, the projection member 46 is mounted on the pressing diaphragm 1 by means of the projection member mounting plate 27 and the bolts 7, thus displaying an effect similar to that of the projection member 6.

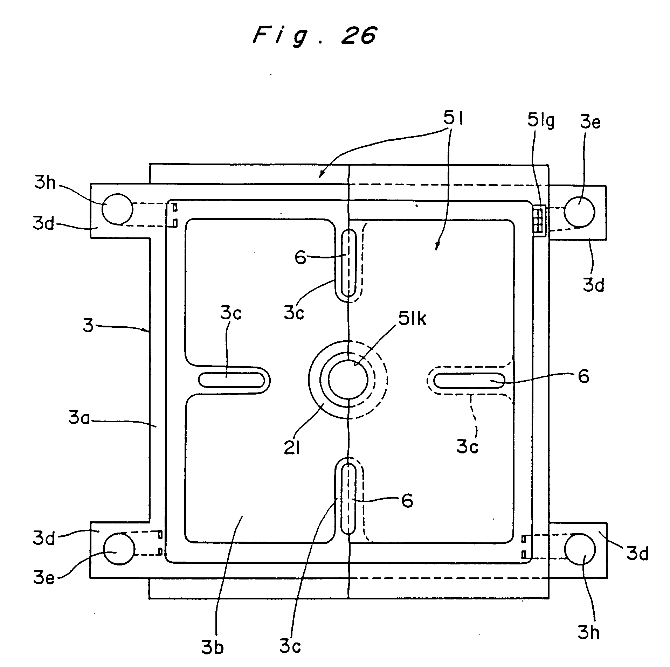

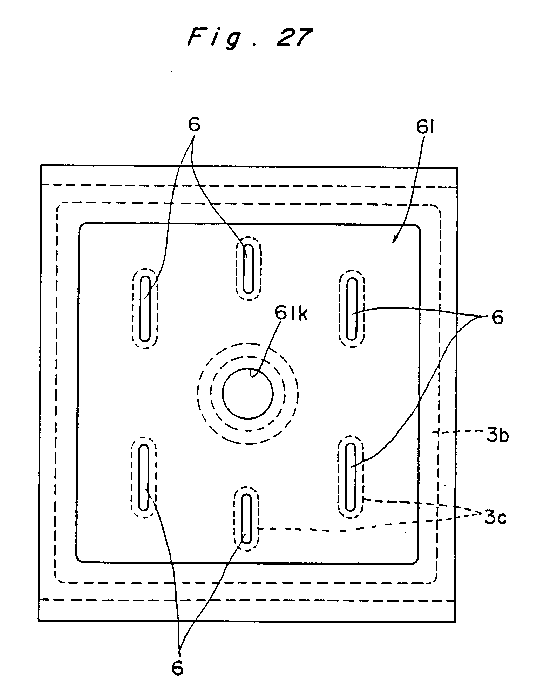

Further, the position of each of the projection members 6, 36, and 46 and the projection member mounting plates 27 on the filtering face is arbitrary. For example, as shown in Fig. 26, in the pressing filter plate main body 3, the projecting portion 3c can be formed integrally with the outer frame 3a. That is, each projecting portion 3c can be formed radially with respect to a slurry supply opening 51k, i.e., each projecting portion 3c can be formed so that it extends from the upper, lower, left, and right of the outer frame 3a, and the projection members 6, 36, 46, and the projection member mounting plates 27 can be mounted on the pressing diaphragm 51 in correspondence with each projecting portion 3c. In Fig. 26, reference numeral 51g corresponds to the opening 1g of the pressing diaphragm 1. As shown in Fig. 27, three projecting portions can be formed each in the sides upper and lower with respect to a slurry supply opening 61k and the projection members 6, 36, 46, and the projection member mounting plate 27 can be mounted on a pressing diaphragm 61 in correspondence with each projecting portion 3c.

The number of the projection member mounting plates 27 for mounting each projection member 6, 36, and 46 thereon is not limited to one, and the configuration thereof is not limited to an approximately rectangle having both end portions thereof curved, but a plurality of projection member mounting plate 27 can be provided. That is, the pillar 6a, 36a, and 46a of each of the projection members 6, 36, and 46 can be mounted on one projection member mounting plate 27 of an arbitrary configuration, for example, circular configuration.

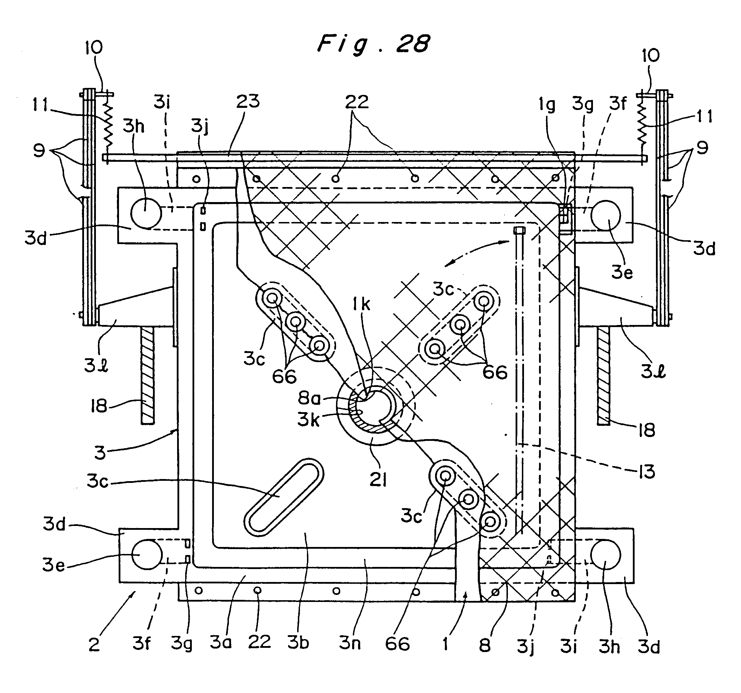

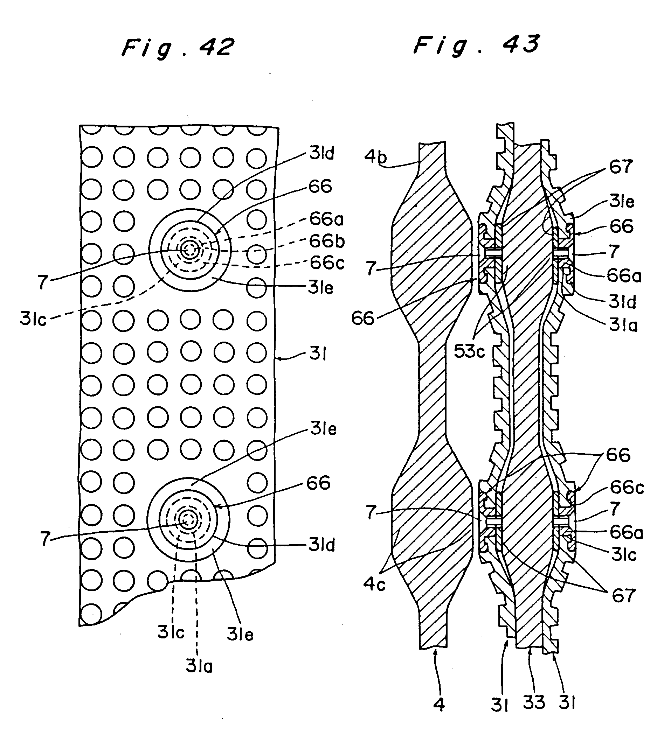

Other embodiments according to the present invention are described in detail based on Figs. 28 through 45. Hereinafter, the different parts from the above embodiments are mainly described.

In the pressing filter plate 2 according to an embodiment shown in Fig. 28, the surface of the front and rear sides of a square filter plate main body 3 is covered with a pair of pressing diaphragms 1 and 1, three projection members 66 are provided on the surface of each pressing diaphragm 1 such that the projection members 66 are arranged on the diagonal lines of the pressing diaphragm 1, projection member mounting plates 67 each serving as a projection member mounting member are provided on the rear surface of each pressing diaphragm 1 in correspondence with the projection members 66, and each projection member 66 is mounted on the projection member mounting plate 67 so that the projection members 66 sandwich the pressing diaphragm 1 therebetween.

In clamping the filter plates, the projecting portion 3c supports both filtering faces 3b and 4b in cooperation with the three projection members 66, the three projection member mounting plates 67, and the projecting portion 4c of the filter plate 4, thus preventing the breakage of the filtering faces 3b and 4b.

In each pressing diaphragm 1, the three projection members 66 and the three projection member mounting plates 67 are provided in the periphery of the slurry supply opening 1k such that the position of the projection members 66 and the projection member mounting plates 67 correspond to each projecting portion 3c, and are each spaced a predetermined distance from the slurry supply opening 1k. A filtrate collecting opening 1g communicating with each opening 3g of the outer frame 3a of the main body 3 is formed on the corner of the pressing diaphragm 1 at the lower left and upper right thereof.

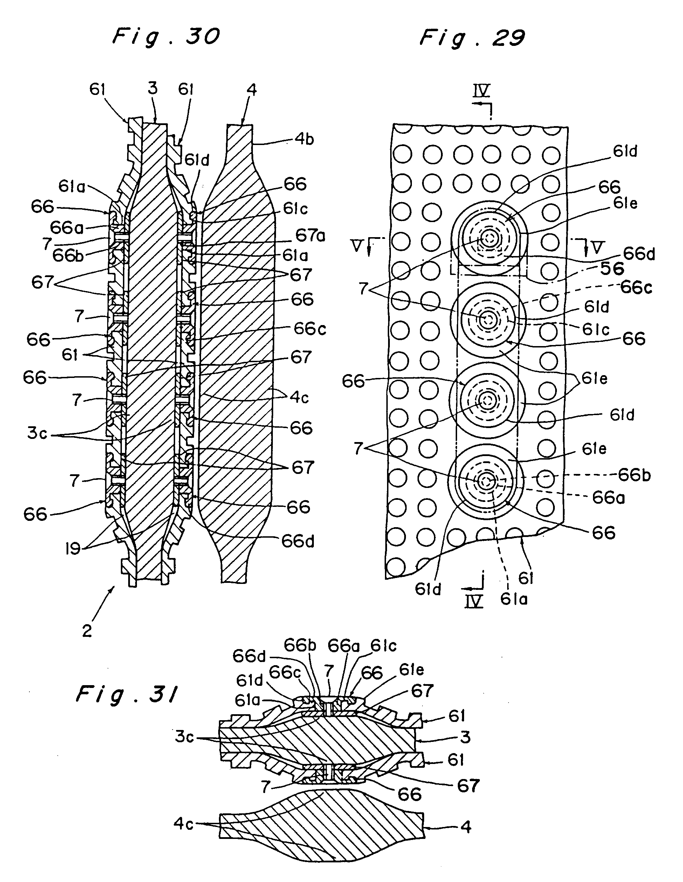

Next, description of the relationship between the pressing diaphragm 1 and each projection member 66 as well as each projection member mounting plate 67 is made by way of another embodiment with reference to Figs. 29 through 36. In the embodiment to be described below, the arrangement and position of the projection member 66, the projection member mounting plate 67, and the bolt 7 are different from those of the embodiment shown in Fig. 28. In the embodiment to be described below, four projection members 66 and four projection member mounting plates 67 are provided.

In Figs. 29 through 36, in a pressing diaphragm 61, a circular projecting portion 61e is formed on the portion in which each projection member 66 is provided and a circular projection member fit-in concave portion 61d is formed inside the circular projecting portion 61e. The circular projection member fit-in concave portion 61d is in a configuration approximately similar to the projection member 66 and provided with a small through-hole 61a at the bottom thereof.

Preferably, each projection member 66 is made of a hard material, such as stainless steel or nylon plywood and formed in a circular configuration as shown in Figs. 29 through 34. Preferably, the thickness of the projection member 66 is so determined that the surface of the projection member 66 almost coincide with that of the outer frame 3a of the main body 3 when the projection member 66 is fitted in the projection member fit-in concave portion 61d formed on the pressing diaphragm 61. Each projection member 66 comprises a circular pillar 66a, a flange 66d projecting from the pillar 66a, a mounting hole 66b penetrating through the center of the pillar 66a, and an engaging concave portion 66c formed in the rear surface of the flange 66d. Each pillar 66a is provided with the flange 66d at one end portion thereof and fitted in the circular through-hole 61a of the pressing diaphragm 61, thus the other end portion thereof contacting the surface of the projection member mounting plate 67. The engaging concave portion 66c tightly engages the circular projecting portion 61c serving as an engaging portion formed in the periphery of the through-hole 61a of the pressing diaphragm 61 and allows a close contact between the pressing diaphragm 61 and the projection member 66, thus effectively preventing the leakage of compressed air from the inside of the pressing diaphragm 61 to the outside thereof or the leakage of the filtrate from the outside of the pressing diaphragm 61 to the inside thereof when the pressing diaphragm expands.

As shown in Figs. 30 through 33 and Fig. 35, the projection member mounting plate 67 is in approximately the same flat configuration as the projection member 66.

The filtering operation of this embodiment is similar to that of the previously described embodiment.

According to the above embodiment, the projection member 66 comprises the pillar 66a, the flange 66d extending from the pillar 66a, the mounting hole 66b, and the engaging concave portion 66c. The projection member 66 is mounted on the pressing diaphragm 1 with the projection member mounting plate 67 and the bolts 7 in such a manner that the pressing diaphragm 1 is sandwiched between the projection member 66 and the projecting member mounting plate 67, and the projection member 66 is not fixed to the pressing filter plate main body 3. Consequently, with the expansion of the pressing diaphragm 1, the projection member 66 is capable of freely moving with respect to the pressing filter plate main body 3 without restricting the expansion of the pressing diaphragm 1. Therefore, when the pressing diaphragm 1 expands, the sudden increase of a load on the pressing diaphragm 1 positioned in the vicinity of the projection member is suppressed, so that the crack of the pressing diaphragm 1 can be effectively prevented. Not mounting the gap holding plate on the surface of the pressing diaphragm 1, each pillar 66a is inserted into each through-hole 1a of the pressing diaphragm 1 and the projection member 66 is mounted on the projection member mounting plate 67 with the bolts 7 so that the pressing diaphragm 1 is sandwiched between the projection member 66 and projection member mounting plate 67, and as a result, in clamping the filter plates, even though pressure is applied from the adjacent filter plate 4 to the pressing diaphragm 1, the pressure acts on the projection member 66 and the projection member mounting plate 67 via the pillars 66a while the pressure hardly acts on the pressing diaphragm 1. Accordingly, in clamping the filter plates, the damage of the pressing diaphragm 1 can be effectively prevented. Since the projecting portions 3c and 4c and the projection member 66 are disposed radially with respect to the slurry supply openings 3k and 4k toward the corners of the filtering faces 3b and 4b, the slurry can be smoothly supplied to the corners of the filtering faces 3b and 4b. Since the projection member 66 and the projection member mounting plate 67 are arranged in a good balance and located symmetrically in both forward and backward sides of the main body 3, an approximately uniform clamping force is applied to the filtering faces 3a and 4a when the adjacent filter plates 2 and 4 are clamped. Further, since the pressing filter plate main body 3 is not required to be provided with a mounting hole for mounting the projection member 66, the pressing filter plate main body 3 can be manufactured more simply. In addition, an effect similar to that of the embodiment as shown in Figs. 29 through 36 can be obtained in the embodiment as shown in Fig. 28.

The present invention is not limited to the above embodiment, but can be embodied in various modifications.

For example, the projection member mounting plate 67 arranged on each pressing diaphragms 1 and 61 is arbitrary.

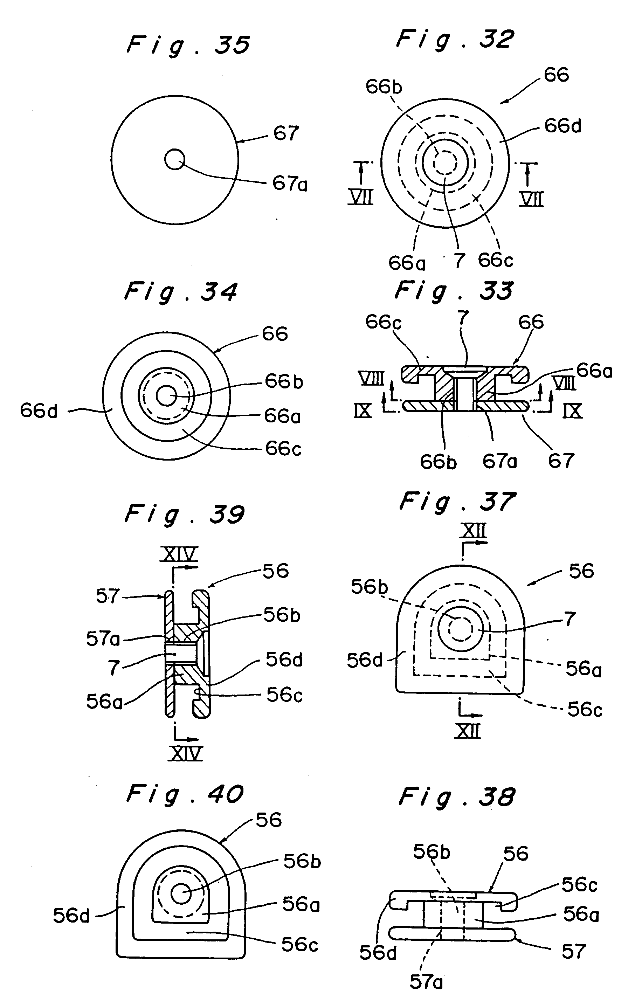

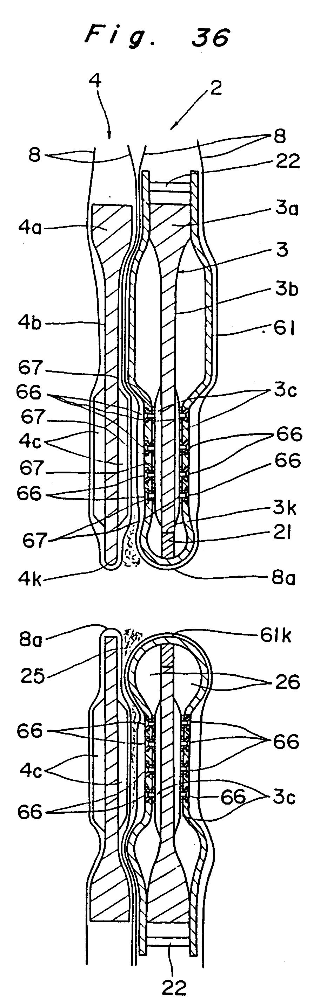

The configuration of each projection member is not limited to a circular configuration, but can be in an arbitrary configuration. For example, as shown by the two-dot chain indicating a projection member in the upper end portion thereof in Fig. 29, a projection member 56 can be formed by making the upper end thereof circular and lower end thereof square as shown in Figs. 37 through 40. In this case, preferably, the projection member mounting plate 57 is in a similar configuration. In the projection member 56, the upper half of the engaging concave portion 56c is in a circular-frame configuration, the lower half thereof is in a quadrangular-frame configuration, and the engaging projecting portion 61c of the pressing diaphragm 61 is in a similar configuration so that both the engaging concave portion 56c and the engaging projecting portion 61c tightly engage with each other, thus effectively preventing the leakage of the filtrate from the front surface of the pressing diaphragm 61 to the rear surface thereof or the leakage of the compressed fluid from the rear surface thereof to the front surface thereof. In this projection member 56, the pillar 56a, the mounting hole 56b, the flange 56d, and the engaging concave portion 56c correspond to the pillar 66a, the mounting hole 66b, the flange 66d, and the engaging concave portion 66c, respectively of the projection member 66. The mounting hole 57a of the projection mounting plate 57 corresponds to the mounting hole 67a of the projection mounting plate 67.

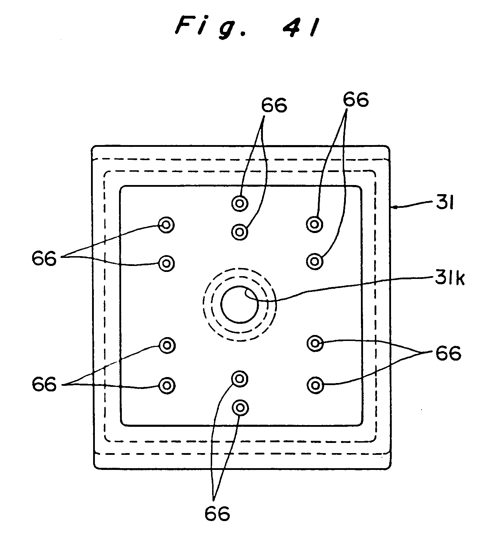

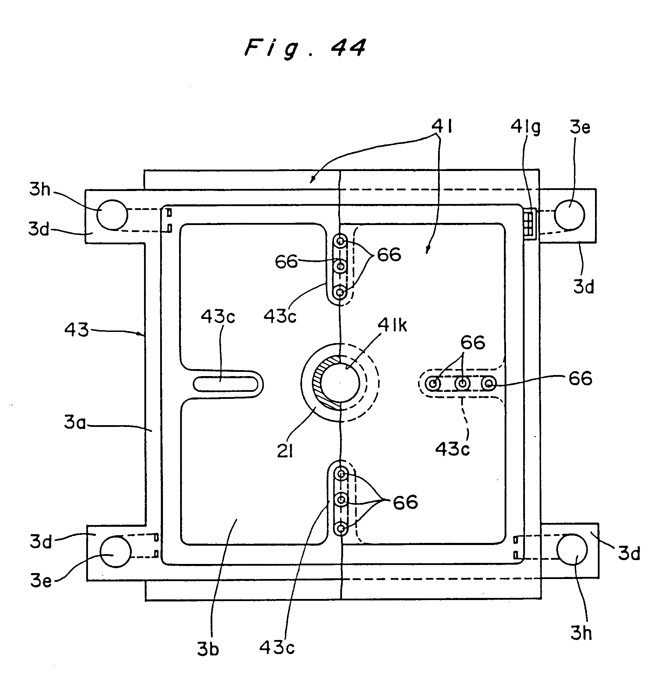

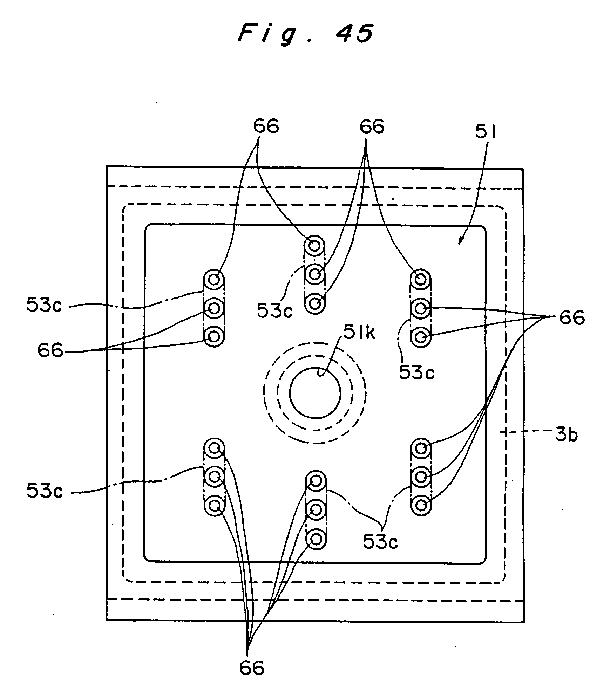

The position of each of the projection members 66 and 56 and the projection member mounting plates 67 and 57 on the filtering face is arbitrary. For example, as shown in Figs. 41 through 43, it is possible to form six circular projecting portions 53c each on the sides upper and lower with respect to a slurry supply opening 31k and mount each projection member 66 and projection member mounting plate 67 on the pressing diaphragm 31 in correspondence with each projecting portion 53c. In this case, the through-hole 31a, engaging projecting portion 31c, fit-in concave portion 31d, and circular projecting portion 31e of the pressing diaphragm 31 correspond to the through-hole 61a, engaging projecting portion 61c, fit-in concave portion 61d, and circular projecting portion 61e of the pressing diaphragm 61, respectively. Further, as shown in Fig. 44, in the pressing filter plate main body 43, the projecting portion 43c can be formed integrally with the outer frame 3a. That is, long projecting portions 43c are formed radially with respect to a slurry supply opening 41k, i.e., each projecting portion 43c is formed so that it extends from the upper, lower, left, and right of the outer frame 3a, and three projection members 66 and three projection member mounting plates 67 can be mounted on the pressing diaphragm 41 in correspondence with each projecting portion 43c. In Fig. 44, reference numeral 41g corresponds to the opening 1g of the pressing diaphragm 1. As shown in Fig. 45, three long projecting portions 53c can be formed each on the sides upper and lower with respect to a slurry supply opening 51k and three projection members 66 and projection member mounting plates 67 can be mounted on a pressing diaphragm 51 in correspondence with each projecting portion 53c.

Further, instead of mounting one projection member 66 or 56 on the projection member mounting plates 67 or 57, a plurality of projection members 66 or 56 can be mounted on a projection member mounting plate which consists of an approximately rectangular plate and is curved in both end portions thereof.

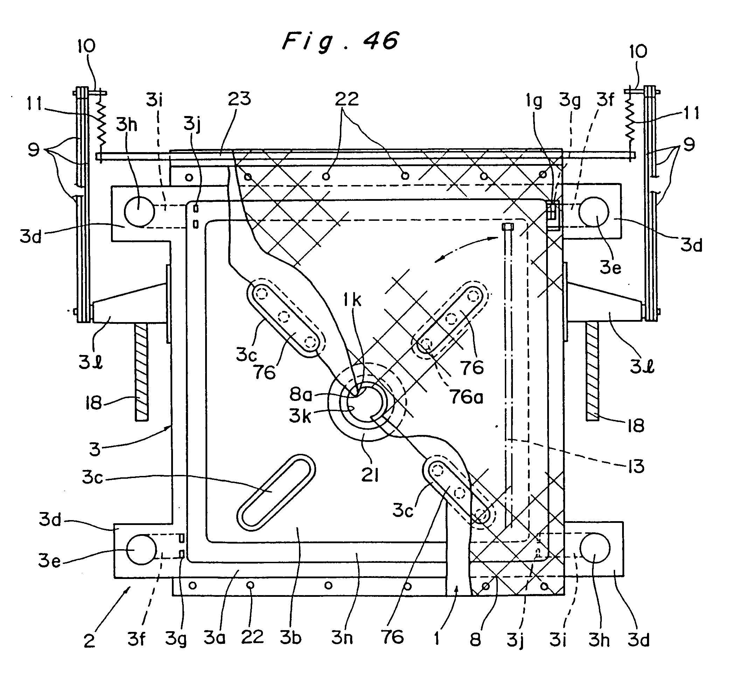

Other embodiments according to the present invention are described in detail based on Figs. 46 through 54. Hereinafter, the different parts from the above embodiments are mainly described.

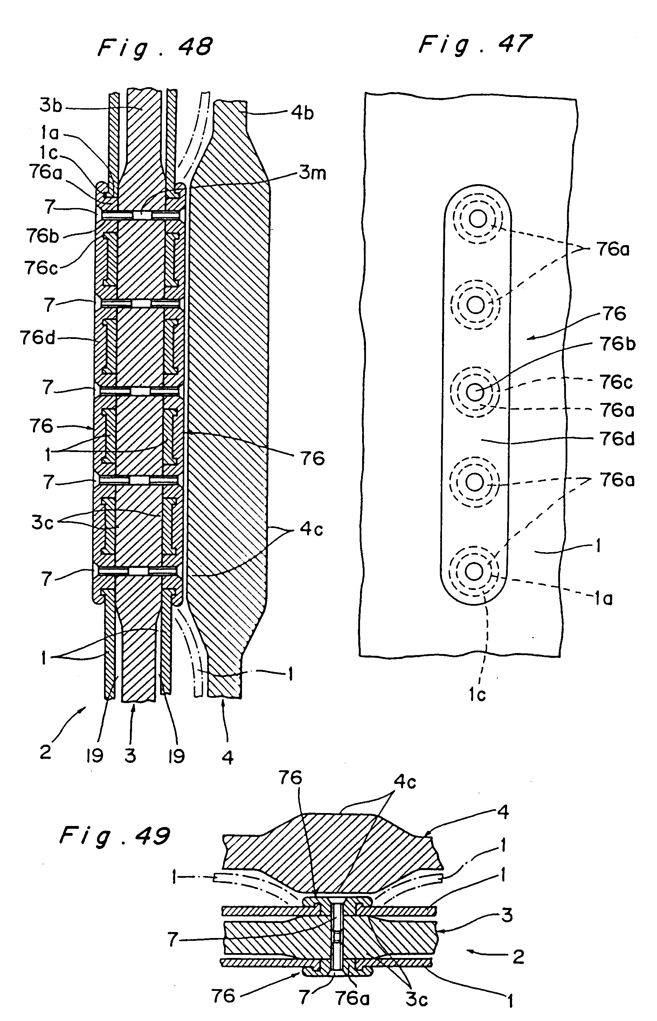

The pressing filter plate 2 according to an embodiment shown in Figs. 46, 47, and 49 comprises a square plate-shaped filter plate main body 3 and a pair of diaphragms 1 and 1 covering the front and rear surfaces of the main body 3 and fixed to the main body 3 with projection members 76. In Fig. 48, reference numeral 3m denotes a bolt screwing hole for mounting a projection member.

A total of five small through-holes 1a are formed in the portion in which each projection member 76 is positioned and a circular projecting portion 1c is formed in the periphery of each through-hole 1a.

Preferably, the thickness of the projection member 76 is so determined that the surface of the projection member 76 almost coincide with that of the outer frame 3a of the main body 3 when the projection member 76 is fixed to the projecting portion 3c of the main body 3. Each projection member 76 comprises five pillars 76a, a mounting hole 76b penetrating through the center of each pillar 76a, an engaging concave portion 76c formed in the periphery of each pillar 76a, and a long connecting plate 76d which connects the pillars 76a with each other. Each pillar 76a is fitted in each through-hole 1a of the pressing diaphragm 1, thus contacting the surface of the pressing filter plate main body 3. The circular projecting portion 1c serving as an engaging portion formed in the periphery of each through-hole 1a of the pressing diaphragm 1 is tightly engaging each engaging concave portion 76c so as to contact the projection member 76 with the pressing diaphragm 1 and prevent the leakage of compressed air when the pressing diaphragm 1 expands. The projection member 76 is fixed to the main body 3 by inserting the bolt 7 into each mounting hole 76b and screwing the bolt 7 into the projecting portion 3c of the main body 3. At this time, although the pressing diaphragm 1 is sandwiched between the projection member 76 and the main body 3, the pressing diaphragm 1 is not damaged by the bolt 7 because the pressing diaphragm 1 is not provided in the portion in which the main body 3 is directly clamped by the bolt 7, namely, in the gap between the pillar 76a and the pressing diaphragm 1. The projecting portion 3c of the main body 3 can be reliably fixed to the projecting portion 3c by making the projecting portion 3c to which the projection member 76 is fixed a little larger than the projection member 76. The projection member 76 is mounted on the pressing diaphragm 1 with five bolts 7 in this embodiment, however, they can be mounted thereon with only the upper and lower bolts 7 and 7. Preferably, the projection member 76 is positioned in the periphery of the slurry supply opening 3k of the filtering face 3b of the main body 3 in a good balance.

The through-hole of each ear on the upper left and the lower right of the filter plate 4 is connected with the opening of the inclined face of the normal filter plate through a connecting passage so as to constitute a compressed fluid supply passage communicating with the compressed fluid supply passage of the pressing filter plate 2. through-hole of the ear of the normal filter plate 4. The through-hole of each ear on the lower left and the upper right of the filter plate 4 is connected with the opening of the outer frame 4a of the normal filter plate 4 through a connecting passage so as to constitute a filtrate collecting passage communicating with the filtrate collecting passage of the pressing filter plate 2.

In clamping the filter plates 2 and 4, the projection member 76 fixed to the projecting portion 3c of the pressing filter plate main body 3 contacts the projecting portion 4c of the normal filter plate 4 in collision therewith through the pair of filter cloths 8 and 8.

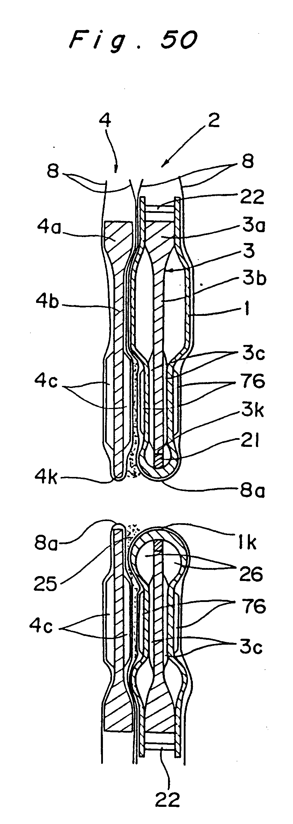

In the filtering operation, as shown in Fig. 50, compressed fluid is supplied to the compressed fluid supply chamber 26 positioned between the pressing diaphragm 1 and the pressing filter plate main body 3, with the result that except the portion fixed by the projection member 76, the pressing diaphragm 1 expands and the cake held between both filter cloths 8 and 8 is compressively filtered. Other operation is similar to that in the previously described embodiments.

According to the above embodiment, since the projection member 76 comprises a plurality of pillars 76a of the projection member 76 connected with each other with the long connecting plate 76d and the pressing diaphragm 1 is fixed to the pressing filter plate main body 3, the pressing diaphragm 1 in the periphery of each pillar 76a expands not in the entire region thereof but in only a part thereof while the long connecting plate 76d is capable of restricting the expansion of the remaining region of the pressing diaphragm 1. Therefore, when the pressing diaphragm 1 expands, a load is reducibly applied to the pressing diaphragm 1 in the vicinity of the projection member, so that the crack of the pressing diaphragm 1 can be effectively prevented. Further, the pressing diaphragm 1 is not fixed to the pressing filter plate main body 3 by a small circular member, but the pressing diaphragm 1 is fixed to the main body 3 by the projection member 76, so that the contact area between the pressing diaphragm 1 and the main body 3 can be increased without reducing the filtering area and the crack of the pressing diaphragm 1 can be effectively prevented. In addition, since projecting portions 3c and 4c and the projection member 76 are positioned radially with respect to the slurry supply openings 3k and 4k toward the corners of the filtering faces 3b and 4b, the slurry can be smoothly supplied to the corners of the filtering faces 3b and 4b.

The present invention is not limited to the above embodiments, but can be embodied in various modifications.

In each projection member, the engaging concave portion 76c is not necessarily provided in the periphery of each pillar 76a, but one engaging concave portion 76c can surround arbitrary number of pillars. That is, for example, as shown in Figs. 51 through 54, six pillars 86a are surrounded with one engaging concave portion 76c. In this projection member 86, a pillar 86a, a mounting hole 86b, and a connecting plate 86d correspond to the pillar 76a, the mounting hole 76b, and the connecting plate 76d of the projection member 76, respectively. The engaging concave portion 86c is formed in the periphery of the rear surface of the projection member 86 as an approximately rectangular frame-shaped concave portion having the upper and lower end portions thereof curved as shown in Fig. 51 and positioned in the peripheral portion of each pillar 86a. In correspondence with the engaging concave portion 86c, an engaging projecting portion 1d approximately rectangular and curved in the upper and lower end portions thereof as shown in Fig. 51 is formed in such a manner that it surrounds the five through-holes 1a of the pressing diaphragm 1. Accordingly, the engaging projecting portion 1d formed on the pressing diaphragm 1 is fitted into the engaging concave portion 86c of the projection member 86 in close contact therewith.

The present invention is not limited to the above embodiments, but can be embodied in various modifications.

For example, the configuration of each projection member is not limited to the above embodiments, but can be varied if they are long in the embodiments shown in Figs. 1-27 and 46-54. In addition, the number of the projection members is arbitrary. The number of the bolts for mounting each projection member on the projection member mounting plate is arbitrary. The number of the bolts for mounting each projection member on the pressing diaphragm is arbitrary. The number of the pillars is arbitrary. The provision of the projecting portion of the main body and/or the projecting portion of the normal filter plate can be eliminated by making thicker the material of the projection member and/or the projection member mounting plate. The position of the slurry supply opening of each of the normal and pressing filter plates is not limited to approximately the center of the filtering face, but it can be formed on a desired portion of the filtering face or on the outer frame so that it communicates with the filtering face. Further, the pressing filter plate and the normal filter plate are not necessarily arranged alternately, but only the pressing filter plates can be provided.

Further, the engaging concave portions of each of the projection members 36, 46, 66, 56, 76, and 86 can be projected, and the engaging projecting portions of each of the pressing diaphragms 1, 31, 41, and 61 can be concaved. That is, the engaging concave portions can be formed as engaging projecting portions, and the engaging projecting portions of each of the pressing diaphragms 1, 31, 41, and 61 can be formed as engaging concave portions.

The position of each of the projection members 66, 56, 76, and 86 and the projection member mounting plates 27, 67, and 57 on the filtering face is arbitrary, as shown in Figs. 26 and 27 in the above embodiments.

In order to project the surface of each of the projection members 6, 36, 46, 66, and 56 from the surface of the pressing diaphragms 1, 31, 41, 51, and 61, respectively, each of the projection members 6, 36, 46, 66, and 56 can be fitted in the projection engaging concave portions of each of the pressing diaphragms 1, 31, 41, 51, and 61.

Instead of screwing the bolt 7 into the mounting hole 27a, 67a, and 57a formed on the projection member mounting plate 27, 67, and 57, the bolt 7 can be fixed to the projection member mounting plate 27, 67, and 57, and after the bolt 7 penetrates through each of the projection members 6, 36, 46, 66, and 56, it can be fastened with a nut.

The material of the projection member mounting plate 27, 67, and 57 is not limited to an elastic one, but the projection member mounting plate 27, 67, and 57 can be composed of a material bendable between the adjacent pillars 6a and 6a, 36a and 36a, 46a and 46a, 66a and 66a, and 56a and 56a, respectively so that the projection member mounting plate 27, 67, and 57 can be bendable between pillars in correspondence with the expansion motion of the pressing diaphragm in order to reduce a load on the pressing diaphragm.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A pressing diaphragm for use in a compression type filter press to cover a surface of the main body of a pressing filter plate, the pressing diaphragm having attached to it: at least one projection member (6,36,46,56,66) provided at the front surface of the diaphragm facing away from the main body; and at least one projection member mounting member (27,57,67) capable of contacting the main body (3), provided at the rear surface of the diaphragm at a position corresponding to a projection member (6,36,46,56,66), and for mounting the projection member (6,36,46,56,66) thereon with a fixture (7);
each projection member (6,36,46,56,66) having at least one pillar portion (6a,36a,46a,56a,66a) contacting the projection member mounting member (27) and fitted in a through-hole (1a,31a,41a,51a,61a) of the pressing diaphragm (1,31,41,51), and a mounting hole (6b,36b,46b,56b,66b) penetrating through each of the pillar portion (6a,36a,46a, 56a,66a),
each projection member mounting member (27,57,67) having at least one mounting portion (27a,57a,67a) for mounting the fixture (7) inserted into the mounting hole (6b,36b,46b, 56b,66b) of each pillar portion of the projection member such that the pressing diaphragm is sandwiched between the projection member and the projection member mounting member.

2. A pressing diaphragm as claimed in claim 1, wherein each projection member (6,36,46) has a plurality of pillar portions (6a,36a,46a) and a long connecting plate portion (6d,36d,46d) for connecting the pillar portions (6a,36a, 46a) with each other and regulating expansion of the pressing diaphragm (1,31,41) fitted onto the periphery of the pillar portions (6a,36a,46a);
and each projection member mounting member (27) has mounting portions (27a) for mounting the fixtures (7) inserted into the mounting holes (6b,36b,46b) of the pillar portions.

3. The pressing diaphragm as claimed in claim 1 or 2, wherein the pressing diaphragm (31, 41, 51, 61) has an engaging portion (31c, 41c) formed to surround the through-hole (31a, 41a), and the projection member (36, 46) further comprises an engaging portion (36c, 46c) capable of tightly engaging the engaging portion (31c, 41c) of the pressing diaphragm.

4. The pressing diaphragm as claimed in claim 1, wherein the projection member (66, 56) has a flange portion (66d, 56d) extending from the pillar portion (66a, 56a), and an engaging portion (66c, 56c) capable of tightly engaging an engaging portion (31c, 61c) formed on the flange portion (66d, 56d) and in the periphery of the through-hole (31a, 61a), and the projection member mounting member (67, 57) has a mounting portion (67a, 57a) for mounting the fixture (7) to be inserted into the mounting hole (66b, 56b) of the pillar portion (66a, 56a) of the projection member (66, 56).

5. The pressing diaphragm of a compression type filter press as claimed in any of claims 1 to 4, wherein a slurry supply opening (1k, 51k, 61k) is provided in approximately the center of the filtering face of the pressing diaphragm (1, 31, 41, 51), and the projection member (66, 56, 46) and the projection member mounting member (67) are arranged around the slurry supply opening (1k, 51k, 61k) such that the projection member (66, 56, 46) and the projection member mounting member (67) are radial with respect to the slurry supply opening (1k, 51k, 61k).

6. The pressing diaphragm of a compression type filter press as claimed in any of claims 1 to 5, wherein a plurality of projection members (66, 56), which of the same construction are mounted on a common projection member mounting member (67, 57).

7. A pressing filter plate of a compression type filter press having a surface of its main body covered with a pressing diaphragm as claimed in any of claims 1 to 6.

8. A pressing filter plate of a compression type filter press comprising:
a main body (3),
a pressing diaphragm (1) covering a surface of the main body (3), and
at least one projection member (76, 86) attached to said surface of the main body (3) for fixing the pressing diaphragm (1) to the main body and regulating the expansion of the pressing diaphragm,
each projecting member (76, 86) comprising:
an elongated connecting plate portion (76d, 86d) located at the front surface of the pressing diaphragm (1) facing away from the main body (3),
a plurality of pillar portions (76a, 86a) each extending from said connecting plate portion (76d, 86d) through a respective through-hole (1a) of the pressing diaphragm (1) and contacting the main body (3),
a mounting hole (76b, 86b) penetrating through each of the pillar portions (76a, 86a), and
a projection fixing member (7) inserted into the mounting hole (76b, 86b) so as to fix the connecting plate portion (76d, 86d) and pillar portions (76a, 86a) to the main body (3).

9. A pressing filter plate as claimed in claim 8, wherein the projection member (76, 86) further comprises at least one engaging portion (76c, 86c) surrounding at least one pillar portion (76a, 86a) and capable of tightly engaging an engaging portion (1c, 1d) formed on the pressing diaphragm (1) and surrounding at least one through-hole (1a).

10. The pressing filter plate of a compression type filter press as claimed in claim 8 or 9, wherein a slurry supply opening (3k) is provided in approximately a center of the main body (3), and the projection member (76, 86) is arranged in a periphery of the slurry supply opening (3k) such that the projection member (76, 86) is radial with respect to the slurry supply opening (3k).

## Patentansprüche

1. Pressmembran zur Verwendung in einer Kompressionsfilterpresse, um eine Oberfläche des Hauptkörpers einer Pressfilterplatte abzudecken, wobei an der Pressmembran befestigt sind:
mindestens ein Überstandselement (6, 36, 46, 56, 66), das an der Vorderfläche der Membran vorgesehen ist und von dem Hauptkörper wegweist; und
mindestens ein Überstandselement-Befestigungselement (27, 57, 67), das der Hauptkörper (3) kontaktieren kann und an der Rückflache der Membran an einer einem Überstandselement (6, 36, 46, 56, 66) entsprechenden Position vorgesehen ist und zum Befestigen des Überstandselements (6, 36, 46, 56, 66) daran mit einer Befestigung (7) dient;
wobei jedes Überstandselement (6, 36, 46, 56, 66) mindestens einen Ständerabschnitt (6a, 36a, 46a, 56a, 66a) hat, der das Uberstandselement-Befestigungselement (27) kontaktiert und in ein Durchgangsloch (1a, 31a, 41a, 51a, 61a) der Pressmembran (1, 31, 41, 51) eingepaßt ist, und ein Befestigungsloch (6b, 36b, 46b, 56b, 66b) hat, das jeden der Ständerabschnitte (6a, 36a, 46a, 56a, 66a) durchdringt,
wobei jedes Überstandselement-Befestigungselement (27, 57, 67) mindestens einen Befestigungsabschnitt (27a, 57a, 67a) zum Befestigen der in das Befestigungsloch (6b, 36b, 46b, 56b, 66b) jedes Ständerabschnitts des Überstandselements eingefügten Befestigung (7) hat, so daß die Pressmembran zwischen dem Überstandselement und dem Uberstandselement-Befestigungselement eingefaßt ist.

2. Pressmembran nach Anspruch 1, bei der jedes Überstandselement (6, 36, 46) eine Vielzahl von Ständerabschnitten (6a, 36a, 46a) und einen langen Verbindungsplattenabschnitt (6d, 36d, 46d) hat zum Verbinden der Ständerabschnitte (6a, 36a, 46a) miteinander und Regulieren der Ausdehnung der Pressmembran (1, 31, 41), die an dem Randbereich der Ständerabschnitte (6a, 36a, 46a) eingepaßt ist;
und wobei jedes Überstandselement-Befestigungselement (27) Befestigungsabschnitte (27a) hat zum Befestigen der in die Befestigungslöcher (6b, 36b, 46b) der Ständerabschnitte eingefügten Befestigungen (7).

3. Pressmembran nach Anspruch 1 oder 2, bei der die Pressmembran (31, 41, 51, 61) einen Eingriffsabschnitt (31c, 41c) hat, der so ausgebildet ist, daß er das Durchgangsloch (31a, 41a) umgibt, und das Überstandselement (36, 46) weiterhin einen Eingriffsabschnitt (36c, 46c) aufweist, der mit dem Eingriffsabschnitt (31c, 41c) der Pressmembran dicht in Eingriff kommen kann.

4. Pressmembran nach Anspruch 1, bei der das Überstandselement (66, 56) einen sich von dem Säulenabschnitt (66a, 56a) erstreckenden Flanschabschnitt (66d, 56d) hat, sowie einen Eingriffsabschnitt (66c, 56c), der mit einem Eingriffsabschnitt (31c, 61c) dicht in Eingriff kommen kann, der an dem Flanschabschnitt (66d, 56d) und in dem Randbereich des Durchgangslochs (31a, 61a) gebildet ist, wobei das Überstandselement (67, 57) einen Befestigungsabschnitt (67a, 57a) zum Montieren der Befestigung (7) hat, die in das Befestigungsloch (66b, 56b) des Ständerabschnitts (66a, 56a) des Überstandselements (66, 56) eingefügt werden soll.

5. Pressmembran einer Kompressionsfilterpresse nach einem der Ansprüche 1 bis 4, bei der eine Schlamm-Zufuhröffnung (1k, 51k, 61k) näherungsweise in der Mitte der Filterfläche der Pressmembran (1, 31, 41, 51) vorgesehen ist und das Überstandselement (66, 56, 46) und das Überstandselement-Befestigungselement (67) um die Schlamm-Zufuhröffnung (1k, 51k, 61k) herum derart angeordnet sind, daß das Überstandselement (66, 56, 46) und das Überstandselement-Befestigungselement (67) in bezug auf die Schlamm-Zufuhröffnung (1k, 51k, 61k) radial sind.

6. Pressmembran einer Kompressionsfilterpresse nach einem der Ansprüche 1 bis 5, bei der eine Vielzahl von Überstandselementen (66, 56) gleicher Konstruktion an einen gemeinsamen Überstandselement-Befestigungselement (67, 57) befestigt sind.

7. Pressfilterplatte einer Kompressionsfilterpresse, bei der eine Oberfläche ihres Hauptkörpers mit einer Pressmembran nach einem der Ansprüche 1 bis 6 abgedeckt ist.

8. Pressfilterplatte einer Kompressionsfilterpresse mit: einem Hauptkörper (3),
einer Pressmembran (1), die eine Oberfläche des Hauptkörpers (3) abdeckt, und mindestens einem Überstandselement (76, 86), das an der Oberfläche des Hauptkörpers (3) befestigt ist, um die Pressmembran (1) an dem Hauptkörper zu befestigen und die Ausdehnung der Pressmembran zu regulieren,
wobei jedes Überstandselement (76, 86) aufweist:
einen länglichen Verbindungsplattenabschnitt (76d, 86d), der sich an der Vorderfläche der Pressmembran (1) befindet und von dem Hauptkörper (3) wegweist,
eine Vielzahl von Ständerabschnitten (76a, 86a), die sich jeweils von dem Verbindungsplattenabschnitt (76d, 86d) durch ein jeweiliges Durchgangsloch (1a) der Pressmembran (1) erstrecken und den Hauptkörper (3) kontaktieren,
ein Befestigungsloch (76b, 86b), das jeden der Ständerabschnitte (76a, 86a) durchdringt, und
ein Überstands-Befestigungselement (7) das in das Befestigungsloch (76b, 86b) so eingefügt ist, daß der Verbindungsplattenabschnitt (76d, 86d) und die Ständerabschnitte (76a, 86a) an dem Hauptkörper (3) befestigt werden.

9. Pressfilterplatte nach Anspruch 8, bei der das Überstandselement (76, 86) weiterhin mindestens einen Eingriffsabschnitt (76c, 86c) aufweist, der mindestens einen Ständerabschnitt (76a, 86a) umgibt und mit einem Eingriffsabschnitt (1c, 1d) dicht in Eingriff kommen kann, der an der Pressmembran (1) ausgebildet ist und mindestens ein Durchgangsloch (1a) umgibt.

10. Pressfilterplatte einer Kompressionsfilterpresse nach Anspruch 8 oder 9, bei der eine Schlamm-Zufuhröffnung (3k) ungefähr in der Mitte des Hauptkörpers (3) vorgesehen ist und das Überstandselement (76, 86) in dem Randbereich der Schlamm-Zufuhröffnung (3k) so angeordnet ist, daß das Überstandselement (76, 86) in bezug auf die Schlamm-Zufuhröffnung (3k) radial gerichtet ist.

## Revendications

1. Membrane à pression s'utilisant dans une presse de filtre à compression pour couvrir le corps principal d'une plaque de filtre à pression, à ladite membrane à pression étant monté:
au moins un élément en saillie (6, 36, 46, 56, 66) prévu à la face avant de la membrane et s'écartant du corps principal; et
au moins un élément de montage d'élément en saillie (27, 57, 67) susceptible de contacter le corps principal (3), prévu à la face arrière de la membrane à une position qui correspond à un élément en saillie (6, 36, 46, 56, 66) et pour monter ledit élément en saillie (6, 36, 46, 56, 66) sur celui-ci avec un dispositif de fixation (7);
chaque élément en saillie (6, 36, 46, 56, 66) ayant au moins une portion de pilier (6a, 36a, 46a, 56a, 66a) en contant avec ledit élément de montage d'élément en saillie (27) et emboîté dans un trou de passage (1a, 31a, 41a, 51a, 61a) de ladite membrane à pression (1, 31, 41, 51), et un trou de montage (6b, 36b, 46b, 56b, 66b) s'étendant à travers chacune desdites portions de pilier (6a, 36a, 46a, 56a, 66a),
chaque élément de montage d'élément de saillie (27, 57, 67) ayant au moins une portion de montage (27a, 57a, 67a) pour monter ledit dispositif de fixation (7) inséré dans ledit trou de montage (6b, 36b, 46b, 56b, 66b) de chaque portion de pilier dudit élément en saillie afin que ladite membrane à pression soit arrangée en sandwich entre ledit élément en saillie et ledit élément de montage d'élément en saillie.

2. Membrane à pression selon la revendication 1, dans laquelle chaque élément en saillie (6, 36, 46) a une pluralité de portions de pilier (6a, 36a, 46a) et une longue portion de plaques de raccord (6d, 36d, 46d) pour raccorder lesdites portions de pilier (6a, 36a, 46a) l'une à l'autre et réguler l'expansion de ladite membrane à pression (1, 31, 41) emboîtée sur la périphérie des dites portions de pilier (6a, 36a, 46a);
et chaque élément de montage d'élément de saillie (27) ayant des portions de montage (27a) pour monter les dispositifs de fixation (7) insérés dans lesdits trous de montage (6b, 36b, 46b) desdites portions de pilier.

3. Membrane à pression selon la revendication 1 ou 2, dans laquelle la membrane à pression (31, 41, 51, 61) a une portion de prise (31c, 41c) formée pour entourer ledit trou de passage (31a, 41a), et ledit élément en saillie (36, 46) comprent en outre une portion de prise (36c, 46c) susceptible d'entrer en prise serrée avec ladite portion de prise (31c, 41c) de ladite membrane à pression.

4. Membrane à pression selon la revendication 1, dans laquelle ledit élément en saillie (66, 56) a une portion de bride (66d, 56d) s'étendant à partir de la portion de pilier (66a, 56a) et une portion de prise (66c, 56c) susceptible d'entrer en prise serrée avec une portion de prise (31c, 61c) formée sur ladite portion de bride (66d, 56d) et dans la périphérie dudit trou de passage (31a, 61a), et ledit élément de montage d'élément en saillie (67, 57) ayant une portion de montage (67a, 57a) pour monter ledit dispositif de fixation (7) à être inséré dans ledit trou de montage (66b, 56b) de ladite portion de pilier (66a, 56a) dudit élément en saillie (66, 56).

5. Membrane à pression d'une presse de filtre à compression selon l'une quelconque des revendications 1 à 4, dans laquelle une ouverture d'amenée de boue liquide (1k, 51k, 61k) est prévue à peu près au centre de la face filtrante de ladite membrane à pression (1, 31, 41, 51), et ledit élément en saillie (66, 56, 46) et ledit élément de montage d'élément en saillie (67) sont agencés autour de ladite ouverture d'amenée de boue liquide (1k, 51k, 61k) afin que ledit élément en saillie (66, 56, 46) et ledit élément de montage d'élément en saillie (67) soient radiaux par rapport à ladite ouverture d'amenée de boue liquide (1k, 51k, 61k).

6. Membrane à pression d'une presse de filtre à compression selon l'une quelconque des revendications 1 à 5, dans laquelle une pluralité d'éléments en saillie (66, 56) de la même construction sont montés sur un élément de montage d'élément commun (67, 57).

7. Plaque de filtre à pression d'une presse de filtre à compression dont une surface du corps principal est couverte d'une membrane à pression selon l'une quelconque des revendications 1 à 6.

8. Plaque de filtre à pression d'une presse de filtre à compression, comprenant:
un corps principal (3),
une membrane à pression (1) qui couvre une surface dudit corps principal (3), et
au moins un élément en saillie (66, 86) attaché à ladite surface dudit corps principal (3) pour fixer ladite membrane à pression (1) audit corps principal et réguler l'expansion de ladite membrane à pression,
chaque élément en saillie (76, 86) comprenant:
une portion allongée de plaque de raccord (76d, 86d) disposée à la face avant de ladite membrane à pression (1) s'écartant dudit corps principal (3),
une pluralité de portions de pilier (76a, 86a), chacune s'étendant à partir de ladite portion de plaque de raccord (76d, 86d) à travers un trou de passage respectif (1a) de ladite membrane à pression (1) et en contact avec le corps principal (3),
un trou de montage (76b, 86b) qui pénètre à travers chacune desdites portions de pilier (76a, 86a), et
un élément de fixation de saillie (7) inséré dans ledit trou de montage (76b, 86b) afin de fixer ladite portion de plaque de raccord (76d, 86d) et des portions de pilier (76a, 86a) audit corps principal (3).

9. Plaque de filtre à pression selon la revendication 8, dans laquelle ledit élément en saillie (76, 86) comprend en outre au moins une portion de prise (76c, 86c) entourant au moins une portion de pilier (76a, 86a) et susceptible d'entrer en prise serrée avec une portion de prise (1c, 1d) formée sur ladite membrane à pression (1) et entourant au moins un trou de passage (1a).

10. Plaque de filtre à pression d'une presse de filtre à compression selon la revendication 8 ou 9, dans laquelle une ouverture d'amenée de boue liquide (3k) est prévue à peu près au centre du dit corps principal (3), et ledit élément en saillie (76, 86) est agencé dans une périphérie de ladite ouverture d'amenée de boue liquide (3k) afin que ledit élément en saillie (76, 86) soit radial par rapport à ladite ouverture d'amenée de boue liquide (3k).
